# EUROPÄISCHE PATENTSCHRIFT

(11) **EP 1 264 581 B1**
(45) Veröffentlichungstag und Bekanntmachung des Hinweises auf die Patenterteilung: **26.07.2006**
(21) Anmeldenummer: 02011263.7
(22) Anmeldetag: 22.05.2002
(51) Int. Cl.: A61C 13/15, A61C 13/087, A61C 13/00

(54) **Kunststoffzahn sowie Verfahren zu seiner Herstellung**
Artificial tooth and manufacturing method thereof
Dent artificielle et son procédé de fabrication

(30) Priorität: 07.06.2001 DE 10127728
(43) Veröffentlichungstag der Anmeldung: 11.12.2002
(73) Patentinhaber: Firma Ivoclar Vivadent AG, 9494 Schaan (LI)
(72) Erfinder: Oswald, Walter, 6820 Frastanz (AT); Tenschert, Eduard, 6710 Nenzing-Beschling (AT)
(74) Vertreter: Baronetzky, Klaus

(56) Entgegenhaltungen:
- WO-A-01/10336
- DE-A- 4 005 570
- DE-A- 19 950 284
- US-A- 5 906 490

## Beschreibung

Die Erfindung betrifft einen Kunststoffzahn gemäß dem Oberbegriff von Anspruch 1 und ein Verfahren zur Herstellung von Kunststoffzähnen, gemäß dem Oberbegriff von Anspruch 8.

Die US 5,906,490 beschreibt einen Materialsatz zum Ausbilden von Zahnersatz wie einer Krone oder einer Brücke. Der Materialsatz weist ein drittes Material auf, aus dem eine stark opake Schicht auf einem Substrat aus Keramik oder Metall oder auf einem faserverstärkten Substrat ausgebildet und ausgehärtet wird. Ein zweites Material des Materialsatzes wird dann als eine weniger opake Schicht auf der stark opaken Schicht ausgebildet und ausgehärtet. Schließlich wird ein erstes Material des Materialsatzes als am wenigsten opake Schicht auf der weniger opaken Schicht ausgebildet und ausgehärtet, um den Zahnersatz auszubilden Die Materialien können hier photopolymerisierbare Materialien sein.

Die WO 01/10336 A1 beschreibt ein Verfahren und eine Vorrichtung für die Photopolymerisation einer Masse zum Aufbau einer Dentalprothese, wobei auf einem Metallträger eine opake Schicht aufgetragen wird, die polymerisiert wird. Nach dem Herstellen der opaken Schicht werden mehrere Schichten hintereinanderfolgend auf die opake Schicht aufgetragen und jeweils einzeln in einem ersten und zweiten Schritt polymerisiert. Beim ersten Schritt wird mit Licht polymerisiert und beim zweiten Schritt wird thermisch polymerisiert.

Die DE 40 05 570 A1 beschreibt ein Verfahren zur Herstellung eines aus einem durch Lichtpolymerisation zu härtenden Kunststoff bestehenden dentalen Gegenstands, insbesondere eines Kunststoffzahns, der in einer transparenten Negativform lichtpolymerisiert wird.

Es ist bekannt, im Dentalbereich lichtpolymerisierbare Materialien einzusetzen, die entweder durch Lichtpolymerisation oder durch Wärmepolymerisation, ggf. in Verbindung mit Druckbeaufschlagung, aushärten. Um eine Lichthärtung vorzunehmen, muß dem Licht ein ungestörter Zutritt zu der polymerisierenden Masse gewährt werden, so daß es bekannt geworden ist, die Formen selbst für Prothesen transparent auszuführen. Eine derartige Lösung ist aus der DE-OS 36 10 683 bekannt. Bei dieser Zahnprothese wird eine besondere polymerisierbare Masse für die Herstellung weichbleibender Formteile verwendet, die ureter anderem Urethan-Oligomere aufweist. Für die Herstellung dieser Prothese wird ein Modell für die Prothese erzeugt, das ein transparentes Formoberteil aufweist. Nachteilig bei dieser Lösung ist jedoch die recht aufwendige Vorgehensweise der separaten Herstellung eines weichelastisch bleibenden Formteils, das mit einem hart auspolymerisierenden Kunststoff kombiniert werden soll.

Ferner ist es bereits vorgeschlagen worden, einen Kunststoffzahn insgesamt aus lichtpolymerisierbarem Material herzustellen. Andererseits müssen Kunststoffzähne besonders verschleißfest sein, so daß an die Oberflächenqualität von Zähnen größere Anforderungen gestellt werden. Dieses Verfahren hat daher in die Praxis keinen Eingang gefunden. Künstliche Zähne werden vielfach aus keramischen Massen hergestellt. Ein derart hergestellter Zahn ist relativ hart und weist eine gute Oberflächenqualität auf. Er ist auch verschleißfest und genügt bei entsprechender Sorgfalt bei der Herstellung und der Verwendung entsprechender Maltechniken auch den heutigen ästhetischen Ansprüchen. Ein gewisser Nachteil von aus keramischen Sintermassen hergestellten Zähnen besteht darin, daß sie von ihrer Oberfäche her härter als natürlicher Zahnschmelz sind. Der im Mund des Patienten dem künstlichen Zahn gegenüberstehende Antagonist wird daher relativ stark beansprucht. Demgegenüber weisen aus Kunststoff- oder Komposit-Materialien bestehende Zähne den Vorteil auf, daß sie zumindest etwas weicher als Zahnschmelz sind. Kunststoffzähne haben gegenüber Keramikzähnen gewisse Vorteile, wozu auch die geringere Abnutzung des Antagonisten des eingesetzten Kunststoffzahns zählt.

Andererseits ist Kunststoff weniger druckfest und dementsprechend verschleißanfälliger als Keramik, so daß bei der Herstellung zumindest darauf geachtet werden muß, die insofern erreichbaren Materialeigenschaften zu optimieren.

Um Kunststoffzähne besonders verschleißfest und hart zu machen, wird ausgewählter Kunststoff verwendet, in der Regel ein Methylmetacrylat-Derivat. Untersuchungen haben ergeben,daß die Art und die Sorgfalt bei der Polymerisation entscheidend für die Oberflächenqualität und Oberfächen-Härte des erzeugten Kunststoffzahns ist. Daher wird ein derartiger Kunststoffzahn regelmäßig unter vergleichsweise hohem Druck und bei entsprechend erhöhter Temperatur polymerisiert.

Um die ästhetischen Anforderungen der heutigen Dentaltechnik zu erfüllen, werden zudem unterschiedliche Schichten verwendet, nämlich eine transparentere Schicht, die Zahnschmelz simulieren soll, und eine opakere Schicht, die Dentin simulieren soll. Diese Schichten werden je unter entsprechendem Druck und entsprechender Temperatur polymerisiert und ergeben so je für sich einen schalenförmigen Körper. Bei dieser Lösung muß dann dafür Sorge getragen werden, daß eine sichere Verbindung zwischen den Schichten gewährleistet ist, damit sich der Kunststoffzahn nicht in seine Bestandteile auflöst.

Dieses Verfahren ist jedoch recht aufwendig, nachdem eine Vielzahl von Formen und/oder Formeinsätzen verwendet werden muß, die regelmäßig abwechselnd gekühlt und erwärmt werden müssen. Ein weiteres Problem besteht darin, daß Kunststoff durch mehrfache, beispielsweise vierfache Erwärmung über seinen Schmelzpunkt und dann intensive Abkühlung seine Materialeigenschaften verschlechtert. Andererseits ist es aber praktisch nicht möglich, nur diejenige Schicht, die gerade auspolymerisiert werden soll, zu erwärmen und unter Druck zu setzen, nachdem sie eng an der Nachbarschicht anliegt, es sei denn, es werden vollständig separate Formen verwendet. Trotz dieser Nachteile sind bislang keine Alternativlösungen für die Optimierung der Herstellung von Kunststoffzähnen bekannt geworden.

Daher liegt der Erfindung die Aufgabe zugrunde, einen Kunststoffzahn gemäß dem Oberbegriff von Anspruch 1 sowie ein Verfahren zu seiner Herstellung gemäß dem Oberbegriff von Anspruch 8 zu schaffen, das, einen einfacher und rascher vorzunehmenden Herstellvorgang mit einer dennoch verbesserten Oberflachenqualität gerade auch im Schneidenbereich des Kunststoffzahns und mit einem verbesserten Verbund des Kunststoffzahns ermöglicht.

Diese Aufgabe wird erfindungsgemäß durch Anspruch 1 bzw. 8 gelöst. Vorteilhafte Weiterbildungen ergeben sich aus den Unteransprüchen.

Überraschend läßt sich mit dem erfindungsgemäßen Verfahren ein Kunststoffzahn in mindestens gleichbleibender Qualität herstellen. Anstelle eines Druck- und insbesondere Temperatur-Zyklusses, den der Zahn bei seiner Herstellung durchlaufen müßte, wird eine mehrfache Lichtpolymerisierung vorgenommen und zwar durch Formwerkzeuge, die lichtdurchlässig ausgestaltet. Der erfindungsgemäße Zahn zeichnet sich dadurch aus, daß er in Schichten aufgebaut ist und die Schichten intensiv miteinander verbunden sind. Er ist vollständig aus lichtpolymerisierbarem Material, wobei die Schneidemasse transparenter als die Dentinmasse. Es ergeben sich mehrere besondere Effekte, die erfindungsgemäß ausgenutzt werden:

Zum einen die Schneidemasse transparenter als die Dentinmase so daß bei der Lichtbeaufschlagung der später aufgebrachten Dentinmasse durch die Schneidemasse die Lichtdurchlässigkeit dieser besonders gut ist. Die für die Lichtquelle schlechter zugängliche Masse läßt sich insofern besser erreichen, was eine Kompensation ermöglicht, so daß weder die Leistung noch die Bestrahlungszeit für das Härten der Dentinmasse besonders hoch sein müßte.

Zum anderen wird die Schneidemasse gerade auch an ihrer formseitigen Oberfläche besonders intensiv mit Lichtstrahlung beaufschlagt. Dies trägt dazu bei, daß sie dort recht hart wird und eine verbesserte Oberflächenqualität zeigt.

Des weiteren ergeben sich durch die Lichtpolymerisation Möglichkeiten, die Intensität der Verbindung zwischen den einzelnen Schichten oder Massen an die Erfordernisse anzupassen. So kann ein erfindungsgemäßer Zahn erst nach Abschluß aller Lichtpolymerisationsschritte fertig polymerisiert werden. Die Grenzschichten zwischen den einzelnen Massen bleiben bei dieser Lösung zunächst noch weich und kontaktfreudig, so daß die erfindungsgemäß intensive Verbindung automatisch erzeugt wird.

Die Art der Bestrahlung Kann in weiten Berbeichen an die Erfordernisse angepaßt werden kann. So kann bei einer vorteilhaften Ausgestaltung der Erfindung die Bestrahlung beispielsweise für die Schneidemassen kurz und intensiv, also beispielsweise mit einem geringeren Abstand der Strahlungsquelle, und für die Dentin- und weitere Massen entsprechend weniger intensiv und länger vorgenommen werden. Auch läßt sich die Frequenz und zeitliche Abfolge der Bestrahlung an die Erfordernisse anpassen, wobei es auch möglich ist, eine gepulste Strahlung zu verwenden. Unter Licht seien hier beliebige geeignete Arten von Strahlung zu verstehen, also elektromagnetische Wellen in dem möglichen Bereich, insbesondere auch ultraviolettes Licht.

Erfindungsgemäß besonders günstig ist es, wenn an den einander gegenüberliegenden Grenzflächen Spritz- oder Gießansätze verbleiben. Diese tragen ebenfalls zur formschlüssigen und insofern noch verbesserten Verankerung der Schichten aneinander bei. Zudem erlaubt die Verlagerung der Gießansätze an diese Stelle die trennlinienfreie Erzeugung der Schneideoberfläche. Die Schneidemasse kann den Zahn ringsum und vollflächig umgeben, ohne daß eine Nachbearbeitung und die damit einhergehehende Verschlechterung der Oberflächenqualität erforderlich wäre.

Insgesamt bietet die Erfindung eine überraschend gute Oberflächenhärte und Gesamtqualität des erzeugten Kunststoffzahns, wobei dennoch die Herstellungszeit gegenüber den bislang eingesetzten Herstellverfahren drastisch verkürzt werden konnte.

Das erfindungsgemäße Verfahren verwendet bevorzugt Blenden, die gemäß einer vorteilhaften Ausgestaltung des Verfahrens ebenfalls lichtdurchlässig sind. Eine Schneidenblende erlaubt es, die Schneidenmasse in der gewünschten Ausgestaltung in der Form separat vorzuhärten, indem die erfindungsgemäße Lichtbeaufschlagung erfolgt. Nachdem die Lichtbeaufschlagung von der Schneide aus erfolgt, entsteht im Verlauf der Lichtpolymerisation ein gewisser Härtegradient, der erfindungsgemäß dahingehend ausgenutzt wird, daß die Lichtpolymerisation zu dem Zeitpunkt abgebrochen wird, zu dem die Rückseite der Schneide, also die Grenzfläche zur Dentinmasse, noch nicht ganz durchgehärtet ist, die Schneidemasse im übrigen jedoch vollständig durchgehärtet ist.

In diesem Zustand wird die Blende entnommen und durch eine neue Blende, die Dentinblende ersetzt, die die Befüllung mit Dentinmasse ermöglicht. Nach der Befüllung wird erneut lichtpolymerisiert, wobei nicht nur die Grenzschicht der Schneidenmasse zur Dentinmasse hin aushärtet, sondern auch die Dentinmasse insgesamt, abgesehen ggf. von ihrem rückwärtigen Bereich, der in einer vorteilhaften Ausgestaltung noch mit einer Basalmasse in Kontakt gebracht werden soll. Die Basalmasse ist dann noch opaker als die Dentinmasse und in einem dritten Schritt kann in entsprechender Weise mit Licht polymerisiert werden.

In einer modifizierten Ausführungsform des erfindungsgemäßen Verfahrens lassen sich auch andere und unterschiedliche Schichten polymerisieren, beispielsweise eine Vorderschneide, die Dentinmasse sowie eine Hals- und eine Rückenschneide. Es versteht sich, daß insofern auch die Farbgebung der verwendetten Massen in weiten Bereichen an die Erfordernisse, also die erwünschte ästhetische Gesamtqualität, angepaßt werden kann.

Es ist besonders günstig, daß eine nahtlose Rundumschneide erzeugt werden kann. Die bevorzugte Blende läßt sich so ausgestalten, daß die Schneidemasse ringsum in den vergleichsweise dünnen Spalt zwischen der Form und der Schneidenmassenblende eingespritzt wird. Zur Verbesserung der Spritzqualität kann es bei dieser Lösung ohne weiteres vorgesehen sein, mehr als einen Spritzansatz zu verwenden, beispielsweise vier ringsum verteilte Spritzansätze.

Für sich betrachtet bildet die Schneidemasse dann einen im wesentlichen becherförmigen Körper, dessen Wandstärke entsprechend der inneren Oberfläche der Form modelliert ist. Die Formtrennung erfolgt - wiederum bei der Betrachtung der Schneidemasse als Becher - am Becherrand, so daß sie jedenfalls nicht mit der äußeren Schneidemassenoberfläche zusammenfällt und dementsprechend insofern keine Qualitätseinbußen zu befürchten sind.

Auch die Entlüftungsöffnungen für die Herstellung der Schneidemasse können an der der Dentinmasse zugewandten Oberfläche ausgebildet sein und bedürfen keiner Nachbearbeitung. Vielmehr stellt die insofern realisierte Unterbrechung der glatten Oberfläche eine Verbesserung der Haftung durch die formschlüssige Verbindung sicher.

Die weiteren Übergänge, also insbesondere der Übergang zwischen einer Basalmasse und der Dentinmasse können in entsprechender Weise ausgestaltet sein. Besonders günstig ist es, wenn das Kunststoffmaterial, also sowohl die Dentinmasse als auch die Schneidemasse, ein anorganisch oder organisch gefülltes licht- und heißhärtbares Monomer ist. Insbesondere bieten sich hier verschiedene Methacrylatverbindungen an. Der Füllstoffgehalt kann bevorzugt im Bereich zwischen 45 und 65 % gehalten sein. Bei diesem Füllstoffgehalt weist das Monomer noch eine so geringe Viskosität auf, daß es auch durch eine dünne Nadel oder dergleichen injizierbar ist. Andererseits ist bei einem derartigen Füllstoffgehalt die bei der Härtung auftretende Schrumpfung recht gering, insbesondere, wenn Glaspartikel oder Pyrogene und/oder gefällte Kieselsäuren als Füllstoffe verwendet werden Die Korngröße sollte bevorzugt zwischen 0,7 und 20 µm betragen, wobei eine Korngröße von weniger als 5 µm die Polierbarkeit der Schneidemassenoberfläche begünstigt. Grundsätzlich kommen auch organische Füllstoffe in Betracht, die die Polierbarkeit begünstigen,wobei z.B.sehr fein vernetzte Polymere eingesetzt werden können.

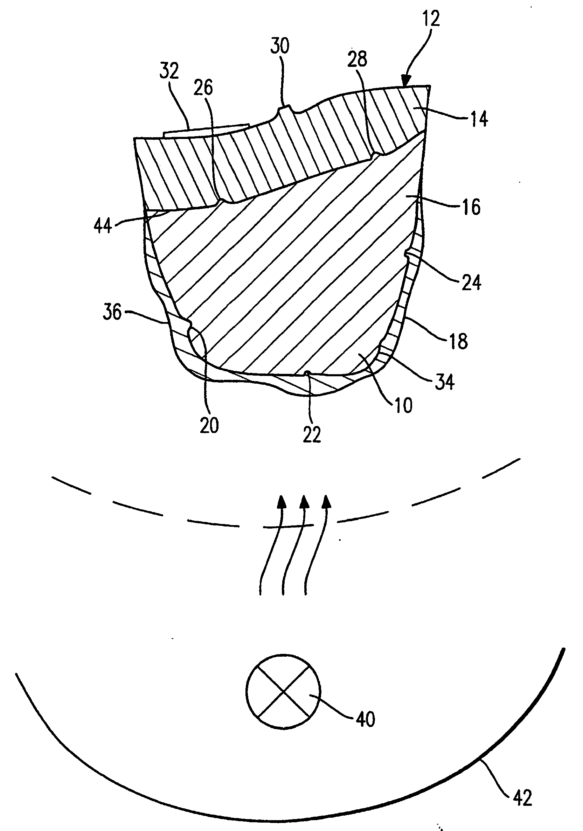

Weitere Einzelheiten, Vorteile und Merkmale ergeben sich aus der nachstehenden Beschreibung einer Ausführungsform der Erfindung anhand der Zeichnung.

Die einzige Figur der Zeichnung zeigt einen erfindungsgemäß hergestellten Zahn in einer Ausführungsform im Schnitt.

Der in der einzigen Figur dargestellte Kunststoffzahn 10 besteht insgesamt aus lichtpolymerisierbarem Material. In dem dargestellten Ausführungsbeispiel ist er dreischichtig aufgebaut, wobei von einer Basalfläche 12 ausgehend eine Basalmasse 14 sich über die Zahnbasis erstreckt. Anschließend an die Basalmasse 14 ist Dentinmasse 16 vorgesehen, und die Dentinmasse 16 ist von Schneidemasse 18 abgedeckt.

Die Massen weisen eine von oben nach unten, also von der Basalmasse zur Schneidemasse, zunehmende Transparenz auf.

Die Massen werden in der Reihenfolge Schneidemasse 18 - Dentinmasse 16- Basalmasse 14 schichtweise hergestellt. Bedingt durch die Herstellung im Spritzgußverfahren weisen sie je Spritzansätze auf, wobei die Schneidemasse in dem dargestellten Ausführungsbeispiel drei Spritzansätze 20, 22 und 24 aufweist, die Dentinmasse zwei Spritzansätze 26 und 28 und die Basalmasse einen Spritzansatz 30. Die Spritzansätze 20 bis 30 ragen je in die benachbarte Masse hinein und sind von dieser umhüllt. Hierdurch ist die Verbindung zwischen den benachbarten.Massen intensiviert.

Ferner ist die Basalmasse 14 an ihrer Basalfläche 12 mit einem Kennzeichnungsfeld 32 versehen, das es erlaubt, eine Beschriftung im nachhinein, eine Prägung während der Herstellung oder eine Markierung in an sich bekannter Weise durch einen entsprechenden Gußeinsatz vorzunehmen.

In dem dargestellten Ausführungsbeispiel weist die Dentinmasse an ihrer Grenzfläche 34 zur Schneidenmasse 16 hin eine im wesentlichen gerade Oberfläche auf. Nachdem die Oberfläche 36 der Schneidemasse 18 zur nicht dargestellten Form hin stark strukturiert und modelliert ist, ergibt sich eine ungleichmäßige Schichtdicke der Schneidemasse 18 auf der Dentinmasse 16. Diese Ausgestaltung ermöglicht es, das Erscheinungsbild des künstlichen Zahns dem natürlichen Zahn noch ähnlicher zu machen.

Nachfolgend wird die Herstellung eines erfindungsgemäßen Kunststoffzahns beschrieben.

Die Form wird zunächst mit einer ersten Blende, der Schneidemassenblende versehen. Deren Oberfläche entspricht der Oberfläche der Dentinmasse 16 zur Grenzfläche 34 hin. Es ergibt sich dementsprechend ein nahtloser und ringsum verlaufender Spalt zwischen der Form und der Schneidemassenblende.

Dieser Spalt wird dann mit Schneidemasse in Monomerformen gefüllt, und zwar gleichzeitig über die Spritzansätze 20, 22 und 24. Zusätzlich sind in der Blende nicht dargestellte Entlüfungsöffnungen vorgesehen, die ebenfalls entsprechende Spuren in der Grenzfläche 34 hinterlassen. Sobald die Befüllung mit der gut fließfähigen und noch nicht polymerisierten Schneidemasse 18 abgeschlossen ist, wird die Lichtpolymerisation eingeleitet, und zwar durch Bestrahlung mit einer Lichtquelle 40. Die Lichtstrahlung dringt durch die lichtdurchlässige Form hindurch, wobei es günstig ist, die Materialstärke der Form im wesentlichen gleich zu halten, um die Bestrahlungsintensität von allen Seiten gleich zu halten. Zusätzlich ist ein Reflektor 42 vorgesehen, der ebenfalls die Bestrahlung vergleichmäßigen soll und dessen Durchmesser erheblich größer als der Durchmesser des Zahns 10 ist, beispielsweise dreimal so groß.

Die Bestrahlung mit der schematisch dargestellten Lichtquelle 40 wird über eine vorgegebene Zeit durchgeführt.

Nach Ablauf der Bestrahlungszeit ist die Schneidemasse 18 ausgehärtet, aber noch nicht vollständig durchgehärtet. Insbesondere auf ihrer von der Lichtquelle abgewandten Oberfläche ist sie noch etwas weich, allerdings nicht so weich, daß Teile der Schneidemasse 18 beim Herausziehen der Schneidemassenblende an dieser hängenbleiben würden.

Nach dem Entfernen der Schneidemassenblende wird eine neue Blende eingesetzt, deren Oberfläche der Grenzfläche 44 zwischen der Dentinmasse 16 und der Basalmasse 14 entspricht. Über die Spritzansätze 26 und 28 wird Dentinmasse 16 in den verbleibenden Hohlraum zwischen der Trennfläche 34 und der Dentinmassenblende eingespritzt.

Nach Abschluß der Befüllung, die unter einem üblichen Spritzgußdruck erfolgt, wird der halb fertiggestellte Kunststoffzahn 10 dann einer erneuten Lichtpolymerisation unterworfen. Die Dauer und Intensität der Bestrahlung kann an die zu polymerisierende Materialstärke angepaßt werden, so daß die Lichtbeaufschlagung für die Härtung der Dentinmasse 16 größer gewählt werden kann als die Lichtbeaufschlagung bei der Härtung der Schneidemasse 18.

Die Lichtbeaufschlagung erfolgt jedenfalls durch die Schneidemasse 18 hindurch. Nachdem die Schneidemasse 18 ausgesprochen transluzent und stark durchscheinend ist, wird die Lichtstrahlung beim Durchtritt durch die Schneidemasse 18 nicht oder nicht relevant gedämpft. Ein Nebeneffekt der erneuten Beaufschlagung liegt darin, daß die Schneidemasse 18 auch im Bereich ihrer Grenzfläche 34 nunmehr vollständig durchhärtet.

Die Lichthärtung der Dentinmasse 16 wird soweit vorgenommen, daß die Dentinmasse 16 formstabil ist, aber an ihrer Grenzfläche 44 zur Basalmasse 14 hin noch nicht ihre Endhärte erreicht hat.

Nach dem Entfernen der Dentinmassenblende wird eine Basalmassenblende eingesetzt, deren Oberfläche der Basalfläche 12 entspricht. Der sich so ergebende Zwischenraum zwischen der Basalmassenblende und der Grenzfläche 44 wird dann mit Basalmasse gefüllt, wobei der Spritzansatz 30 verwendet wird.

Nach Abschluß der Befüllung wird die Lichtquelle 40 erneut eingeschaltet und eine Durchhärtung der der Grenzfläche 44 benachbarten Bereiche der Dentinmasse 16 und auch der Basalmasse 14 vorgenommen.

Während der Lichthärtung erwärmt sich der Kunststoffzahn 10 etwas, jedoch nicht so stark, daß bereits eine Polymerisation der neu zugeführten Masse, beispielsweise der Basalmasse 14 nach Durchhärtung der Dentinmasse 16, erschwert wäre. Nach Abschluß der einzelnen Schritte, die das erfindungsgemäße Verfahren bilden, wird der vollständig lichtpolymerisierte Zahn 10 der Form entnommen, wozu die Basalmassenblende entfernt wird.

Anschließend hieran wird seine Härte durch eine Heißluftbehandlung erhöht. Dies kann beispielsweise dadurch automatisiert geschehen, daß die entformten Zähne auf einem Förderband eine Heißluftstation durchlaufen. Anschließend hieran kann bei Bedarf eine Oberflächenbehandlung wie ein Polieren der Oberfläche 36 vorgenommen werden, und es können auch entsprechende Maltechniken eingesetzt werden, wenn dies erwünscht ist.

Es versteht sich, daß ohne weiteres mehrere Zähne parallel und daher mit hohem Durchsatz gefertigt werden können. Die Fertigung läßt sich auch gut automatisieren. Es versteht sich, daß das für die Form verwendete Material an die Wellenlänge der Strahlung angepaßt werden muß. Wenn beispielsweise eine Lichtbeaufschlagung nicht mit sichtbarem Licht, sondern mit UV-Licht vorgenommen werden soll, muß das Formmaterial für UV-Licht genügend durchlässig sein. In einer modifizierten Ausgestaltung läßt sich das erfindungsgemäße Verfahren auch für die Herstellung von Schneideschalen verwenden. Diese lassen sich auf einem Schneidezahnstumpf eines Patienten aufsetzen, wobei es sich versteht, daß hier unter den Begriff Kunststoffzahn auch derartige Schalen oder Teilzähne zu subsumieren sind.

Die Überprüfung der erfindungsgemäßen Kunststoffzähne ergab, daß die erzielbare Endhärte ausgesprochen gut ist. Auch die Maßhaltigkeit ist überraschend gut. Es konnten lediglich Maßdifferenzen von weniger als 0,08 mm festgestellt werden, so daß sich insgesamt gerade auch im Hinblick auf die drastische Reduzierung der Zykluszeit eines Produktionszyklusses eine erhebliche Verbesserung ergibt.

In einer weiteren Ausgestaltung ist es vorgesehen, dass die in die Form eingebrachte Blende aus einem lichtundurchlässigen Material besteht. Die Verwendung einer derartigen Blende erlaubt es, bei Bedarf eine Abschirmung gegen die Lichthärtung an den erwünschten Stellen zu erwirken. Nach Entfernen der Blende kann dann die vollständige Aushärtung vorgenommen werden.

## Patentansprüche

1. Kunststoffzahn (10), der aus einer lichtpolymerisierbaren Schneidmasse (18), einer lichtpolymerisierbaren Dentinmasse (16) und gegebenenfalls mindestens einer weiteren, lichtpolymerisierbaren Masse (14) in aufeinander folgenden, intensiv mit einder verbundenen Schichten aufgebaut ist, **dadurch gekennzeichnet, dass** Spritz- oder Gussansätze (20, 22, 24,26, 28, 30) an den Grenzflächen (34, 44) der Schichten vorgesehen sind.

2. Kunststoffzahn nach Anspruch 1, **dadurch gekennzeichnet, dass** die Schneidemasse (18) transparenter als die Dentinmasse (16) ist, die durch Lichtbeaufschlagung durch die Schneidemasse (18) hindurch polymerisierbar ist.

3. Kunststoffzahn nach einem der vorhergehenden Ansprüche, **dadurch gekennzeichnet, dass** der Zahn (10) eine Basalfläche (12) aufweist, die kennzeichenbar, insbesondere stempelbar ist.

4. Kunststoffzahn nach einem der vorhergehenden Ansprüche, **dadurch gekennzeichnet, dass** die Schneidemasse (18) die Dentinmasse (16) dergestalt umgibt, dass ihre Schichtstärke über den Verlauf entsprechend der Modellierung der Zahnaussenform (36) variiert.

5. Kunststoffzahn nach einem der vorhergehenden Ansprüche, **dadurch gekennzeichnet, dass** der Kunststoffzahn (10) an allen Seiten, abgesehen ggf. von der Basalfläche (12), frei von Trennlinien und Pressfahnen ist.

6. Kunststoffzahn nach einem der vorhergehenden Ansprüche, **dadurch gekennzeichnet, dass** er aus drei Massen (14, 16, 18) aufgebaut ist, wobei sich eine Basalmasse (14) zwischen der Basalfläche (12) und der Dentinmasse (16) erstreckt und insbesondere eine Schichtstärke aufweist, die etwas grösser als die grösste Schichtstärke der Schneidemasse (18) ist.

7. Kunststoffzahn nach einem der vorhergehenden Ansprüche, **dadurch gekennzeichnet, dass** mehrere Schichten die Dentinmasse (16) umgeben, insbesondere eine Vorderschneidenmasse, eine Rückenschneidenmasse und eine Halsschneidemasse.

8. Verfahren zur Herstellung von Kunststoffzähnen aus mindestens zwei unterschiedlichen Massen, wobei in einem ersten Schritt eine erste Masse eines Kunststoffzahns (10) in eine lichtdurchlässige form eingebracht wird und durch die Form hindurch mit Licht polymerisiert wird, **dadurch gekennzeichnet, dass** in einem zweiten Schritt eine zweite Masse des Kunststoffzahns (10) in die Form eingebracht wird und durch die erste Masse hindurch mit Licht polymerisiert wird.

9. Verfahren nach Anspruch 8, **dadurch gekennzeichnet, dass** eine Mehrzahl von Formen in einer Formenbasis im wesentlichen zugleich für die Herstellung von Zähnen, insbesondere eines Zahnsatzes, verwendet werden.

10. Verfahren nach Anspruch 8 bis 10, **dadurch gekennzeichnet, dass** für die Durchführung des ersten Schrittes, insbesondere zur Einbringung einer Schneidemasse, eine Blende in die Form eingebracht wird, die einen Hohlraum belässt, der der zu erstellenden Schneidemasse entspricht.

11. Verfahren nach einem der Ansprüche 8 bis 10, **dadurch gekennzeichnet, dass** für die Durchführung jedes Schritts eine Beaufschlagung des in der Herstellung begriffenen Kunststoffzahns mit Licht erfolgt und jede Masse soweit durchgehärtet wird, dass sie Formfestigkeit für das Einbringen der darauffolgenden Masse aufweist.

12. Verfahren nach einem der Ansprüche 8 bis 11, **dadurch gekennzeichnet, dass** die einzelnen Schritte bei einer Temperatur deutlich unterhalb der Aushärttemperatur der zu polymerisierenden Massen, insbesondere im wesentlichen bei Raumtemperatur durchgeführt werden.

13. Verfahren nach einem der Ansprüche 8 bis 12, **dadurch gekennzeichnet, dass** eine für die Realisierung eines einzelnen Verfahrensschritts in die Form eingebrachte Blende aus einem lichtdurchlässigen, aber formbeständigen Material besteht.

14. Verfahren nach einem der Ansprüche 8 bis 13, **dadurch gekennzeichnet, dass** eine für die Realisierung eines einzelnen Verfahrensschritts in die Form eingebrachte Blende aus einem lichtundurchlässigen, aber formbeständigen Material besteht.

15. Verfahren nach einem der Ansprüche 8 bis 15, **dadurch gekennzeichnet, dass** nach Abschluss der einzelnen Schritte der Zahn durch Erwärmung fertigpolymerisiert wird.

## Claims

1. A synthetic material tooth (10) which is built up from a photopolymerisable incisor material (18), a photo-polymerisable dentine material (16) and, optionally, at least one other photopolymerisable material (14) in successive intensively bonded together layers, **characterised in that** injection-moulded or cast nipples (20,22,24,26,28, 30) are provided at the boundary surfaces (34,44) of the layers.

2. A synthetic material tooth according to Claim 1, **characterised in that** the incisor material (18) is more transparent than the dentine material (16) which can be polymerised by exposure to light through the incisor material (18).

3. A synthetic material tooth according to any one of the preceding Claims, **characterised in that** the tooth (1) has a basal surface (12) which can be marked, in particular can be stamped.

4. A synthetic material tooth according to any one of the preceding Claims, **characterised in that** the incisor material (18) surrounds the dentine material (16) in such a way that its layer thickness varies over the course corresponding to the modelling of the tooth outer shape (36).

5. A synthetic material tooth according to any one of the preceding Claims, **characterised in that** the synthetic material tooth (10) is free of separating lines and pressing tabs on all sides, optionally apart from the basal surface (12).

6. A synthetic material tooth according to any one of the preceding Claims, **characterised in that** it is built up from three materials (14,16,18), wherein a basal material (14) extends between the basal surface (12) and the dentine material (16) and, in particular, has a layer thickness which is slightly greater than the maximum layer thickness of the incisor material (18).

7. A method according to any one of the preceding Claims, **characterised in that** a plurality of layers surround the dentine material (16), in particular a front incisor material, a rear incisor material and a neck incisor material.

8. A method of producing synthetic material teeth from at least two different materials, wherein in a first step a first material of a synthetic material tooth (10) is introduced into a translucent mould and is photopolymerised through the mould, **characterised in that** in a second step a second material of the synthetic material tooth (10) is introduced into the mould and is photopolymerised through the first material.

9. A method according to Claim 8, **characterised in that** a plurality of moulds are used in a mould base substantially simultaneously for the production of teeth, in particular a set of teeth.

10. A method according to Claims 8 to 10, **characterised in that** to carry out the first step, in particular to introduce an incisor material, a shield is introduced into the mould, which leaves a cavity which corresponds to the incisor material to be prepared.

11. A method according to any one of Claims 8 to 10, **characterised in that** to carry out each step the synthetic material tooth in the course of production is exposed to light and each material is thoroughly cured until it exhibits the dimensional stability for the application of the succeeding material.

12. A method according to any one of Claims 8 to 11, **characterised in that** the individual steps are carried out at a temperature clearly below the curing temperature of the materials to be polymerised, in particular substantially at room temperature.

13. A method according to any one Claims 8 to 12, **characterised in that** a shield introduced into the mould to carry out an individual method step consists of a translucent but dimensionally stable material.

14. A method according to any one Claims 8 to 13, **characterised in that** a shield introduced into the mould to carry out an individual method step consists of an opaque but dimensionally stable material.

15. A method according to any one Claims 8 to 15 [sic], **characterised in that** after conclusion of the individual steps the tooth undergoes final polymerisation by heating.

## Revendications

1. Dent artificielle (10) composée d'une masse de découpe (18) polymérisable à la lumière, d'une masse de dentine (16) polymérisable à la lumière et le cas échéant au moins d'une autre masse (14) polymérisable à la lumière en couches successives reliées de manière intensive entre elles, **caractérisée en ce que** des enduits par injection ou moulage (20, 22, 24, 26, 28, 30) sont prévus sur les surfaces limites (34, 44) des couches.

2. Dent artificielle selon la revendication 1, **caractérisée en ce que** la masse de découpe (18) est plus transparente que la masse de dentine (16) qui est polymérisable par l'application de lumière à travers la masse de découpe (18).

3. Dent artificielle selon l'une des revendications précédentes, **caractérisée en ce que** la dent (10) présente une surface basale (12) qui peut être identifiée, notamment poinçonnée.

4. Dent artificielle selon l'une des revendications précédentes, **caractérisée en ce que** la masse de découpe (18) entoure la masse de dentine (16) de manière à ce que son épaisseur de couche varie sur le tracé conformément à la modélisation de la forme extérieure de la dent (36).

5. Dent artificielle selon l'une des revendications précédentes, **caractérisée en ce que** la dent artificielle (10) est exempte de lignes de séparation et de traces de moulage sur tous les côtés, sauf le cas échéant la surface basale (12).

6. Dent artificielle selon l'une des revendications précédentes, **caractérisée en ce qu'**elle est composée de trois masses (14, 16, 18), de sorte qu'une masse basale (14) s'étend entre la surface basale (12) et la masse de dentine (16) et présente notamment une épaisseur de couche qui est quelque peu supérieure à l'épaisseur de couche la plus élevée de la masse de découpe (18).

7. Dent artificielle selon l'une des revendications précédentes, **caractérisée en ce que** plusieurs couches entourent la masse de dentine (16), notamment une masse de découpe avant, une masse de découpe arrière et une masse de découpe de collet.

8. Procédé de fabrication de dents artificielles d'au moins deux masses différentes, moyennant quoi dans une première étape, une première masse d'une dent artificielle (10) est insérée dans un moule translucide et polymérisée avec de la lumière à travers le moule, **caractérisé en ce que** dans une deuxième étape, une deuxième masse de la dent artificielle (10) est insérée dans le moule et polymérisée avec de la lumière à travers la première masse.

9. Procédé selon la revendication 8, **caractérisé en ce qu'**une pluralité de moules dans une base de moule sont employées principalement parallèlement pour la fabrication de dents, notamment d'un jeu de dents.

10. Procédé selon l'une des revendications 8 à 10, **caractérisé en ce que** pour la réalisation de la première étape, notamment pour insérer une masse de découpe, un obturateur est inséré dans le moule qui laisse une cavité correspondant à la masse de découpe à réaliser.

11. Procédé selon l'une des revendications 8 à 10, **caractérisé en ce que** pour la réalisation de chaque étape, on effectue une application de lumière sur la dent artificielle à fabriquer et chaque masse est durcie de manière à ce qu'elle présente une rigidité de forme pour insérer la masse qui succède.

12. Procédé selon la revendication 8 à 11, **caractérisé en ce que** les différentes étapes sont réalisées à une température clairement inférieure à la température de durcissement des masses à polymériser, notamment généralement à température ambiante.

13. Procédé selon l'une des revendications 8 à 12, **caractérisé en ce qu'**un obturateur inséré dans le moule pour réaliser une seule étape de procédé est constitué d'un matériau translucide mais indéformable.

14. Procédé selon l'une des revendications 8 à 13, **caractérisé en ce qu'**un obturateur inséré dans le moule pour réaliser une seule étape de procédé est constitué d'un matériau opaque mais indéformable.

15. Procédé selon l'une des revendications 8 à 15, **caractérisé en ce qu'**après réalisation des différentes étapes, la dent reçoit une finition par polymérisation par réchauffement.
